# EUROPEAN PATENT APPLICATION

(11) **EP 4 722 683 A1**
(43) Date of publication of application: **08.04.2026**
(21) Application number: 25203105.9
(22) Date of filing: 18.09.2025
(51) Int. Cl.: G01M 15/02, F24H 15/208, G01M 15/14, G05D 16/16, G05D 16/20

(54) **AIR HEATING AND ROUTING SYSTEM AND TESTING ARRANGEMENT USING SAME**

(30) Priority: 01.10.2024 US 202418903830
(71) Applicant: The Boeing Company, Arlington, VA 22202 (US)
(72) Inventor: Burns, John F., Arlington, 22202 (US); Cook, Donald J., Arlington, 22202 (US); Lunn, Adam, Arlington, 22202 (US)
(74) Representative: Witte, Weller & Partner Patentanwälte mbB

(57) **Abstract**

A testing arrangement includes an air heating and routing system (AHRS) system configured to receive and convey a flow of air and having a three-stage pressure adjusting subsystem for adjusting pressure of the conveyed air. The AHRS system also includes an air heater configured for regulating temperature of the conveyed air and plumbing for fluidly connecting the air heater and the three-stage pressure adjusting subsystem and convey the flow of air. The testing arrangement also includes a pressure transducer for detecting pressure of the conveyed air and an electronic controller. The electronic controller is configured to regulate the three-stage pressure adjusting subsystem, using the pressure detected by the pressure transducer, and the air heater to output the pressure and temperature regulated air via the AHRS plumbing. The testing arrangement may further include a test stand in operative communication with the AHRS. A testing method employs such a testing arrangement.

## Description

### INTRODUCTION

The present disclosure relates to a system and a method using temperature- and pressure-controlled flow of air, such as for testing of an air cycle machine.

A test system is a resource used for developing, characterizing, and testing components, systems, and machines. Test systems may use working fluids and/or electrical power to actuate various equipment and perform specific operations. A test system may also use a controller interfacing with data acquisition devices and actuators, such as valves and transducers, to manage the system's control parameters and the test machine's operation.

A test stand may be integrated into a test system and be designed to mount thereon and operate a specific machine. A test stand allows the machine to be assessed in different operating regimes and offers measurement of several physical variables associated with the subject operation. A test stand may be used for research and development in an original equipment manufacturer (OEM) laboratory. A test stand may also be used in a service center for tuning or evaluation of in-use machines or at the end of a production line in a manufacturing facility.

### SUMMARY

An embodiment of the present disclosure is a testing arrangement including an air heating and routing system (AHRS) configured to receive and convey a flow of air. The AHRS includes a three-stage pressure adjusting subsystem configured to regulate pressure of the conveyed air. The AHRS system also includes an air heater configured to regulate temperature of the conveyed air and plumbing configured to fluidly connect the air heater and the three-stage pressure adjusting subsystem and convey the flow of air. The testing arrangement also includes a pressure transducer configured to detect pressure of the conveyed air and an electronic controller in operative communication with the air heater, the three-stage pressure adjusting subsystem, and the pressure transducer. The electronic controller is configured to regulate the air heater and the three-stage pressure adjusting subsystem, using the pressure of the conveyed air detected by the pressure transducer, to output the pressure and temperature regulated air via the AHRS plumbing.

The testing arrangement may additionally include an actuation sensor configured to detect the flow of air and enable, via the electronic controller, operation of the air heater when the flow of air is detected.

The three-stage pressure adjusting subsystem may include a first stage having a dome-loaded pressure reducing first valve having a first valve outlet pressure sensor and a pressure maintaining feedback loop. The three-stage pressure adjusting subsystem may also include a second stage having three pressure regulating valves. The three pressure regulating valves specifically include a second, a third, and a fourth valve, arranged in parallel. One of the three valves may be selected to regulate pressure of the conveyed air based on required outlet pressure of the AHRS; and

The three-stage pressure adjusting subsystem may additionally include a third stage having a fifth pressure regulating valve, operated by the electronic controller, and arranged in line with the flow of conveyed air in the AHRS plumbing. The fifth pressure regulating valve is configured to control the pressure of the conveyed air at an outlet of the AHRS defined by the AHRS plumbing.

The dome-loaded pressure reducing first valve may be configured to reduce pressure of the conveyed air from 700 to 150 Psig.

In the second stage, the subject selected valve may be tuned for fine pressure control to reduce the pressure from 150 Psig to a selected preset pressure value and maintain the subject pressure at +/-0.5 Psig.

In the third stage, the fifth pressure regulating valve may be regulated by the electronic controller in an active pressure control loop to actuate the second stage when a difference between detected pressure at the outlet of the AHRS and the preset pressure value is greater than a preset deviation.

The preset deviation may be +/- 0.015 Psig.

The testing arrangement may additionally include a test stand in operative communication with the AHRS and configured to position thereon an air cycling machine (ACM) having a compressor and a turbine. The test stand includes a support structure; and a plurality of wheels mounted to the support structure and configured to facilitate mobility of the test stand.

The test stand also includes a duct assembly moveably mounted to the support structure and configured to receive the pressure and temperature regulated air from the outlet of the AHRS, supply the pressure and temperature regulated air to an inlet of the compressor of the ACM, and exhaust air from an outlet of the turbine of the ACM to atmosphere.

The test stand additionally includes a heat exchanger in fluid communication with the ACM via the duct assembly and configured to reduce temperature of the air received from an outlet of the compressor and circulate the reduced temperature air to the inlet of the turbine.

The test stand further includes at least one sensor configured to detect temperature of the air within the duct assembly and communicate the detected temperature to the electronic controller.

The ACM may include at least one thermocouple configured to detect temperatures of ACM bearings and communicate the detected ACM bearing temperatures to the electronic controller for assessment of health of the ACM.

The pressure transducer may be arranged on the test stand and configured to detect pressure of the conveyed air at an inlet to the compressor of the air cycling machine.

The electronic controller may be programmed with a preset pressure value. In such an embodiment, the electronic controller may be further configured to regulate pressure of the conveyed air to output the pressure and temperature regulated air at the outlet of the AHRS via comparing the detected pressure to the preset pressure value.

The testing arrangement may additionally include at least one pneumatic connector configured to fluidly link the test stand to the AHRS plumbing.

The duct assembly may include flexible piping, expansion joints, and hangers configured to adaptably maintain the duct assembly in position relative to the support structure.

The duct assembly may additionally include a plurality of discrete pipes on rollers configured to facilitate shifting of the respective pipes relative to the support structure due to thermal expansion and contraction.

The test stand may additionally include at least one coupler configured to connect the air cycling machine to the duct assembly. Such couplers may also join individual pipes of the duct assembly and absorb thermal expansion or contraction of the duct assembly.

Each coupler may include a multi-segment retaining shell having a V-shaped cross-section inner surface configured to draw together the adjoining pipe ends.

Each coupler may include a band having a tightening fastener configured to draw together segments of the retaining shell and hold the shell in a compressed state.

The joined individual pipes may include adjoining pipe ends having retaining ridges configured to interface with the inner surface of the retaining shell and counter the joined pipes from coming apart.

The coupler may include a high-temperature material (such as silicone) seal ring arranged on an outer diameter of the adjoining pipes and configured to block leakage of airflow from between the adjoining pipe ends.

The retaining shell may be sized to generate an air gap between the adjoining pipe ends configured to absorb expansion and/or contraction of the adjoining pipes of the duct assembly. Each coupler may be configured to absorb up to 0.4 in of thermal expansion or contraction between the adjoining pipe ends without leakage

The test stand may additionally include a fiber-optic speed sensor arranged within the duct assembly proximate the ACM. The fiber-optic speed sensor may be configured to detect rotational speed of the ACM and transmit a signal indicative of the detected rotational speed to the electronic controller.

The pipe mounting the speed sensor may be rigidly connected to each of a neighboring pipe and the ACM via a respective coupler. In such an embodiment, each coupler may facilitate removal and replacement of the ACM and installation of the pipe with the speed sensor relative to the ACM.

The testing arrangement may additionally include a filter arranged in fluid communication with the duct assembly and configured to remove contaminants from the air supplied to the air cycling machine.

An additional embodiment of the present disclosure is a testing method employing the above testing arrangement.

The above features and advantages, and other features and advantages of the present disclosure, will be readily apparent from the following detailed description of the embodiment(s) and best mode(s) for carrying out the described disclosure when taken in connection with the accompanying drawings and appended claims.

### BRIEF DESCRIPTION OF THE DRAWINGS

FIG. 1A is a schematic illustration of an air heating and routing system (AHRS) system layout included in a testing arrangement, according to the disclosure.
FIG. 1B is a schematic illustration of a test stand included in the testing arrangement and in operative communication with the AHRS shown in FIG. 1A positioning thereon an air cycling machine (ACM), according to the disclosure.
FIG. 2 is a schematic perspective illustration of the test stand shown in FIG. 1B, according to the disclosure.
FIG. 3 is a schematic partial cross-sectional illustration of a duct assembly connected to the ACM positioned on the test stand shown in FIG. 1B, specifically illustrating a plurality of couplers and a fiber-optic speed sensor, according to the disclosure.
FIG. 4 is a schematic perspective exploded view of the coupler shown in FIG. 3, illustrating individual components thereof.
FIG. 5 is a schematic perspective illustration of the fiber-optic speed sensor, shown in FIG. 3, mounted to a pipe for securing within the duct assembly via a representative coupler, according to the disclosure.
FIG. 6 is a flow chart illustrating a testing method using the AHRS shown in FIGS. 1-5.

### DETAILED DESCRIPTION

Embodiments of the present disclosure as described herein are intended to serve as examples. Other embodiments may take various and alternative forms. Additionally, the drawings are generally schematic and not necessarily to scale. Some features may be exaggerated or minimized to show details of particular components. Therefore, specific structural and functional details disclosed herein are not to be interpreted as limiting, but merely as a representative basis for teaching one skilled in the art to variously employ the present disclosure.

Certain terminology may be used in the following description for the purpose of reference only, and thus are not intended to be limiting. For example, terms such as "above" and "below" refer to directions in the drawings to which reference is made. Terms such as "front", "back", "fore", "aft", "left", "right", "rear", "side", "upward", "downward", "top", and "bottom", etc., describe the orientation and/or location of portions of the components or elements within a consistent but arbitrary frame of reference, which is made clear by reference to the text and the associated drawings describing the components or elements under discussion.

Furthermore, terms such as "first", "second", "third", and so on may be used to describe separate components. Such terminology may include the words specifically mentioned above, derivatives thereof, and words of similar import, and are used descriptively for the figures, and do not represent limitations on the scope of the disclosure, as defined by the appended claims. Moreover, the teachings may be described herein in terms of functional and/or logical block components and/or various processing steps. It should be realized that such block components may include a number of hardware, software, and/or firmware components configured to perform the specified functions.

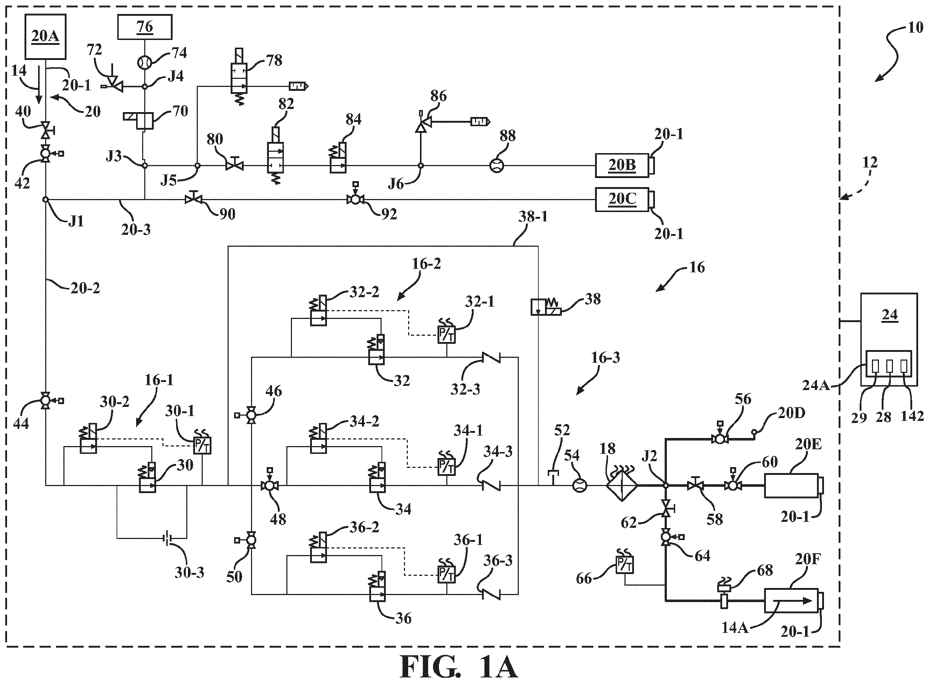

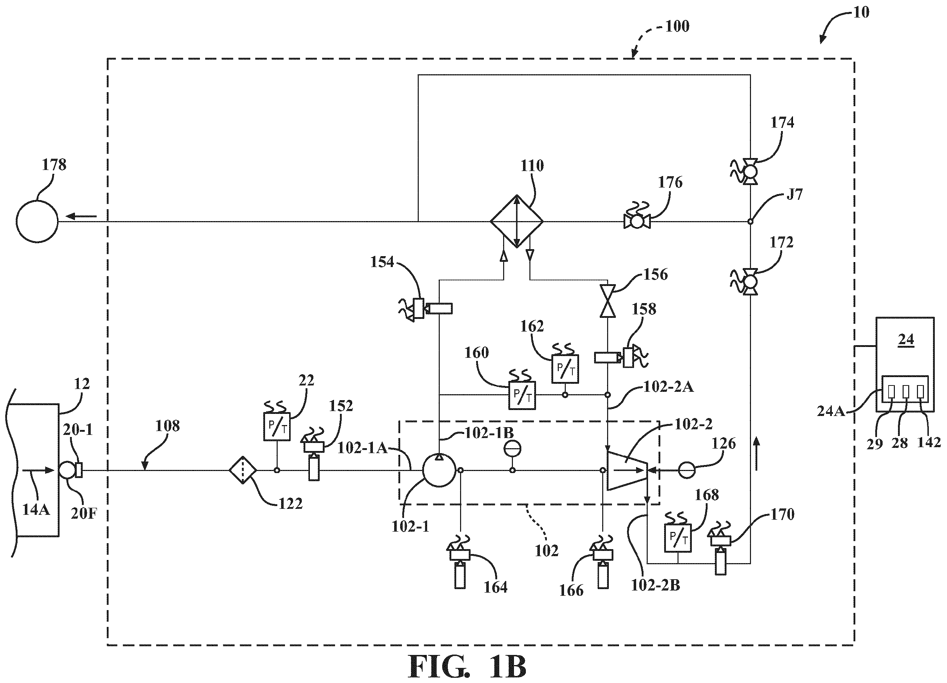

Referring to the drawings in which like elements are identified with identical numerals throughout, FIGS. 1A and 1B illustrate a testing arrangement 10. The testing arrangement 10 is configured as a system of operatively connected and interacting subsystems and components designed and constructed to facilitate performance assessment and development of machinery operated using a flow of pressure- and temperature-controlled air. The testing arrangement 10 includes an air heating and routing system (AHRS) 12 (shown in FIG. 1A) configured to receive and convey a flow of air 14. The AHRS 12 includes a three-stage pressure adjusting subsystem 16 configured to regulate pressure of the received and conveyed air 14. The AHRS 12 also includes an air heater 18 configured to regulate temperature of the conveyed air 14. The air heater 18 may be electrically operated. The processed, pressure and temperature regulated airflow is indicated in the Figures via numeral 14A. The AHRS 12 additionally includes AHRS plumbing 20 having various pipes configured to fluidly connect the air heater 18 and the three-stage pressure adjusting subsystem 16 and transfer the flow of air 14.

The AHRS plumbing 20 also defines an inlet 20A for receiving the conveyed air 14 and at least one outlet, shown as AHRS outlets 20B, 20C, 20D, 20E, and 20F, for discharging the pressure and temperature regulated air 14A. The testing arrangement 10 may also include a pneumatic connector 20-1 arranged on the AHRS plumbing 20 at each outlet 20B, 20C, 20D, 20E, 20F (shown in FIG. 1A). Each pneumatic connector 20-1 is configured to fluidly link the AHRS plumbing 20 to a respective test stand, such as an air cycling machine (ACM) test stand, to be described in detail below. The testing arrangement 10 also includes a pressure transducer 22 (arranged on a test stand to be described in detail below) configured to detect pressure of the conveyed, pressure and temperature regulated air 14A. The testing arrangement 10 additionally includes an electronic controller 24 (shown in FIGS. 1A and 1B), configured as a control and measurement system, in operative communication with the air heater 18, the three-stage pressure adjusting subsystem 16, and the pressure transducer 22.

The electronic controller 24 includes a memory 24A that is tangible and non-transitory. The memory 24A may be a recordable medium that participates in providing computer-readable data or process instructions. Such a medium may take many forms, including but not limited to non-volatile media and volatile media. Non-volatile media used by the electronic controller 24 may include, for example, optical or magnetic disks and other persistent memory. Volatile media of each of the controller's memory 24A may include, for example, dynamic random-access memory (DRAM), which may constitute a main memory. Such instructions may be transmitted by one or more transmission medium, including coaxial cables, copper wire and fiber optics, including the wires that comprise a system bus coupled to the vehicle systems.

Memory 24A of the electronic controller 24 may also include a flexible disk, hard disk, magnetic tape, other magnetic medium, a CD-ROM, DVD, other optical medium, etc. The electronic controller 24 may be equipped with a high-speed primary clock, requisite Analog-to-Digital (A/D) and/or Digital-to-Analog (D/A) circuitry, input/output circuitry and devices (I/O), as well as appropriate signal conditioning and/or buffer circuitry. Algorithms required by the electronic controller 24 or accessible thereby, generally indicated via numeral 26, may be stored in the memory 24A and automatically executed to provide the required functionality to facilitate operation and performance assessment and development of machinery in the context of the testing arrangement 10.

As part of the testing arrangement 10, the electronic controller 24 is configured, i.e., structured and programmed, to regulate the air heater 18 and the three-stage pressure adjusting subsystem 16, using the pressure of the conveyed air detected by the pressure transducer 22, to output the pressure and temperature regulated air 14A via the AHRS plumbing 20. The electronic controller 24 is programmed with a preset pressure value 28 and regulates the conveyed air 14 to adjust parameters of the output airflow 14A using the three-stage pressure adjusting subsystem 16 by comparing the pressure detected by the pressure transducer 22 to the programmed preset pressure value. The electronic controller 24 may adjust the output airflow 14A pressure to within a preset deviation 29, e.g., +/- 0.015 Psig, of the preset pressure value 28.

As shown in FIG. 1A, the three-stage pressure adjusting subsystem 16 may include a first stage 16-1 having a dome-loaded pressure reducing first valve 30. The first valve 30 may have a first valve outlet pressure sensor 30-1 and a pressure maintaining feedback loop 30-2. For example, the first valve 30 may be configured to reduce pressure of the conveyed air 14 from 700 to 150 Psig. The three-stage pressure adjusting subsystem 16 may additionally include a second stage 16-2 having a number of pressure regulating valves, specifically shown as three pressure regulating valves - a second valve 32, a third valve 34, and a fourth valve 36. The second, third, and fourth valves 32, 34, 36 may be arranged in parallel, wherein one of the three valves is selected to adjust pressure of the conveyed air 14 based on required outlet pressure of the AHRS 12. The subject selected valve 32, 34, or 36 may be tuned for fine pressure control to reduce the pressure - from 150 Psig to a selected pressure value and maintain such pressure at +/-0.5 Psig.

The three-stage pressure adjusting subsystem 16 may further include a third stage 16-3 having a reduced diameter pipe (compared to the pipes in preceding stages 16-1 and 16-2) connecting the 150 Psig outlet of first stage 16-1 to outlet of second stage 16-2. The third stage 16-3 is configured to control the conveyed air 14 via a fifth pressure regulating valve 38, operated by the electronic controller 24. The fifth pressure regulating valve 38 may be arranged in line with the flow of conveyed air 14 in the AHRS plumbing 20. The fifth pressure regulating valve 38 is particularly configured to control the pressure of conveyed air 14 at the outlet of the AHRS 12 and may provide the final outlet pressure with accuracy of 0.01%, such that with an input pressure of 150 Psig the resultant accuracy may be approximately 0.015 Psi. The electronic controller 24 may be specifically configured to operate the fifth pressure regulating valve 38. The fifth pressure regulating valve 38 may be set at a 50% open starting position to target the required outlet pressure of the regulated air 14A.

With continued reference to FIG. 1A, the AHRS plumbing 20 may receive ambient temperature inlet air 14 through a 4-inch inlet 20A pipe at up to 700 Psig at a flow rate of 230 lbs/min from a facility source of air. The facility source should be generally configured to maintain such inlet conditions for a duration of time sufficient to at least run a particular testing procedure on a respective test unit, such as for 30 minutes. As may be seen in FIG. 1A, from the inlet 20A, the flow of air 14 travels through an AHRS pipe 20-1 and across a manual inline valve 40 and a ball valve 42 to a junction J1. The valve 40 may be used to isolate the AHRS 12 from the facility source when the system is not in use or for maintenance. The ball valve 42 is set to an on or off position by the electronic controller 24 to either isolate the rest of the AHRS 12 or supply the system with the airflow 14.

From junction J1, the flow of air 14 travels via pipe 20-2 through a ball valve 44 into the first stage 16-1 of the three-stage pressure adjusting subsystem 16 for pressure regulation via the dome-loaded first valve 30. In the first stage 16-1, the pressure reducing valve 30 may regulate its downstream pressure to a set point of ~150 Psig using direct input from a pressure transducer 30-1. Pressure corrections are sent via a pneumatic control loop to a regulator 30-2 from the pressure transducer 30-1 to adjust pressure at the top of the dome internal to the valve 30. The set point of the subject control loop is set by the electronic controller 24. An orifice plate 30-3 allows a small amount of air 14 to leak past the valve 30 while the AHRS 12 is not in operation to avoid trapping pressure either upstream or downstream thereof.

As shown in FIG. 1A, following the first stage 16-1, the flow of air 14 travels into individual electronic controller 24 regulated second, third, or fourth valves 32, 34, 36 in respective pressure control branches and control loops of the second stage 16-2. The flow of air 14 is governed via respective ball valves 46, 48, and 50. The ball valves 46, 48, 50 have an on/off operation to regulate which pressure control branch of the second stage 16-2 the air 14 flows into one of the valves 32, 34, 36 that are configured to regulate air pressure in the corresponding branch. The ball valve 46 may govern airflow pressure in the range of 0-50 Psig, the ball valve 48 may govern airflow pressure in the range of 50-100 Psig, while the ball valve 50 may govern airflow pressure in the range of 110-125 Psig. The airflow 14 pressure set point may be regulated in the second stage 16-2 via the ball valves 46, 48, 50 to within +/-0.5 Psi to activate individual valves 32, 34, 36 based on the pressure required by a specific test stand, such as an air cycling machine to be discussed in detail below.

The pressure output set point is set by the controller 24. Pressure corrections for when the second stage 16-2 output pressure deviates from the set point are made according to the procedure below. The pressure regulating second valve 32 may regulate its downstream pressure using direct input from a pressure transducer 32-1. Pressure corrections are sent via a pneumatic control loop to a regulator 32-2 from the pressure transducer 32-1 to adjust the output of the second valve 32. Similarly, the pressure regulating third valve 34 may regulate its downstream pressure using direct input from a pressure transducer 34-1. Pressure corrections are sent via a pneumatic control loop to a regulator 34-2 from the pressure transducer 34-1 to adjust the output of the third valve 34. The pressure regulating fourth valve 36 may analogously regulate its downstream pressure using direct input from a pressure transducer 36-1. Pressure corrections are sent via a pneumatic control loop to a regulator 36-2 from the pressure transducer 36-1 to adjust the output of the fourth valve 36.

The output air 14 from individual pressure regulating second, third, and fourth valves 32, 34, 36 is directed to respective check valves 32-3, 34-3, 36-3 to prevent reverse flow of regulated air 14. After the second stage 16-2, the flow of air 14 out of one of the pressure regulating second, third, and fourth valves 32, 34, 36 is directed into the third stage 16-3. In the third stage 16-3, the fifth pressure regulating valve 38 operates in an active pressure control loop to vary the flow of air 14 upstream of the second stage 16-2 when a difference between detected outlet pressure (such as at the outlet 20F) and the preset pressure value 28 is greater than the preset deviation 29. For example, in the third stage 16-3, the airflow 14 may be controlled via the fifth pressure regulating valve 38 to an accuracy of greater than 0.5 Psi by adding a marginal amount of air flow and pressure through a comparatively smaller (e.g., 0.25 inch) diameter pipe 38-1.

As a result varying the airflow into the second stage 16-2, the fifth pressure regulating valve 38 may be regulated by the electronic controller 24 to precisely maintain the AHRS outlet pressure, such as within the +/- 0.015 Psig preset deviation 29 of the preset pressure value 28. In other words, in the event the electronic controller 24 detects a deviation of the outlet pressure greater than 0.5 Psi, an appropriate pressure regulating valve 32, 34, or 36 of the second stage 16-2 may be actuated. If greater precision is required, the fifth pressure regulating valve 38 may be actuated from an initial set point of ~50% open or completely closed to either increase or decrease the relatively small amount of airflow between the first 16-1 and second 16-2 pressure regulating stages. Accordingly, the fifth pressure regulating valve 38 operates at ~150 Psig to achieve the desired pressure setpoint downstream of the three-stage pressure adjusting subsystem 16 regulating valves.

The fifth pressure regulating valve 38 is deactivated or set back to its initial position when a pressure deviation greater than 0.5 Psi is detected. Air generally flows forward through the three-stage pressure adjusting subsystem 16 of the AHRS 12 because the upstream pressure in the system is greater than the downstream pressure and check valves are in place to prevent reverse flow. Dealing with deviations 0.5 Psi or greater is controlled by the electronic controller 24 using the appropriate pressure regulating valve 32, 34, or 36. Once the AHRS 12 operation stabilizes and the outlet pressure is within the 0.5 Psi deviation, the fifth pressure regulating valve 38 will be actuated. This approach keeps the two individual pressure control loops of the second and third stages 16-2, 16-3 from fighting each other or the AHRS 12 outlet pressure from overshooting its required value. It is also envisioned that the two individual pressure loops of stages 16-2 and 16-3 may be active at the same time.

Following fine pressure regulation in the third stage 16-3, the flow of air 14 is directed through a pressure sensor 52 and a flow meter 54 to the air heater 18. The pressure sensor 52 is a sensor tap in the corresponding pipe configured to operate as an auxiliary or back-up pressure sensor. The pressure sensor 52 and the flow meter 54 communicate respective data to the electronic controller 24. The air heater 18 is regulated via the electronic controller 24 to increase the temperature of the pressure regulated airflow to a value required by a particular test stand being supplied with the pressure and temperature regulated air 14A. After the temperature of pressure regulated airflow is increased, the pressure and temperature regulated air 14A is directed to one of the AHRS outlets 20D, 20E, and 20F. Specifically, the airflow travels to a junction J2 from where the air may be released to atmosphere through an emergency release ball valve 56 via the AHRS outlet 20D. Alternatively, the airflow may be directed, via a manual valve 58 and a (controller 24 regulated) ball valve 60 to the AHRS outlet 20E or, via a manual valve 62 and a (controller 24 regulated) ball valve 64 to the AHRS outlet 20F. A pressure sensor 66 communicates the pressure and a temperature sensor 68 communicates the temperature of the regulated air 14A provided at the AHRS outlet 20F to the electronic controller 24.

With continued reference to FIG. 1A, from junction J1, the flow of air 14 also travels via pipe 20-3 on to the outlets 20B and 20C. Specifically, the airflow 14 may travel through junction J3 and be directed to a pressure regulating valve 70 controlling its inlet pressure of 700 Psig down to outlet pressure in the range of 0-40 Psig. From the pressure regulating valve 70 the airflow 14 travels to junction J4 branching out to a pressure relief valve 72 configured to vent the air to atmosphere when line pressure exceeds 40 Psig. When the pressure relief valve 72 is closed, the airflow 14 travels from junction J4 to a flow meter 74, such as a visually inspected gauge used for adjusting the pressure regulating valve 70 to achieve an airflow of 0.5-5 SCFM. After flow meter 74, the airflow is directed to an actuation sensor 76 configured as an airflow detection switch. The actuation sensor 76 may be located on the heater 18 and configured to enable operation of the heater only when the airflow 14 is detected.

The airflow 14 also travels through junction J3 and junction J5 to a solenoid-operated valve 78. Valve 78 is controlled by the electronic controller 24 and is configured to release pressure from the lines of the AHRS plumbing 20 upstream of the outlet 20B. The airflow 14 also travels past junction J5 via a manually operated throttle valve 80 to a solenoid-operated valve 82. The electronic controller 24 is configured to open valve 82 when a respective test stand (such as an air cycling machine test stand, to be described in detail below) is connected and in use. From the solenoid-operated valve 82 the airflow 14 is directed to an electronic controller 24 operated pressure regulating valve 84 controlling the airflow pressure from an inlet of 700 Psig down into the range of 0-300 Psig. After the pressure regulating valve 84, the airflow 14 travels to junction J6 branching out to an over-pressure relief valve 86 configured to vent the air to atmosphere when line pressure exceeds 150 Psig. When the pressure relief valve 86 is closed, the airflow 14 travels from junction J6 to a flow meter 88 and on to the outlet 20B. Alternatively, from junction J1, the airflow 14 is directed to the manually operated on/off valve 90 and through a ball valve 92 to the outlet 20C.

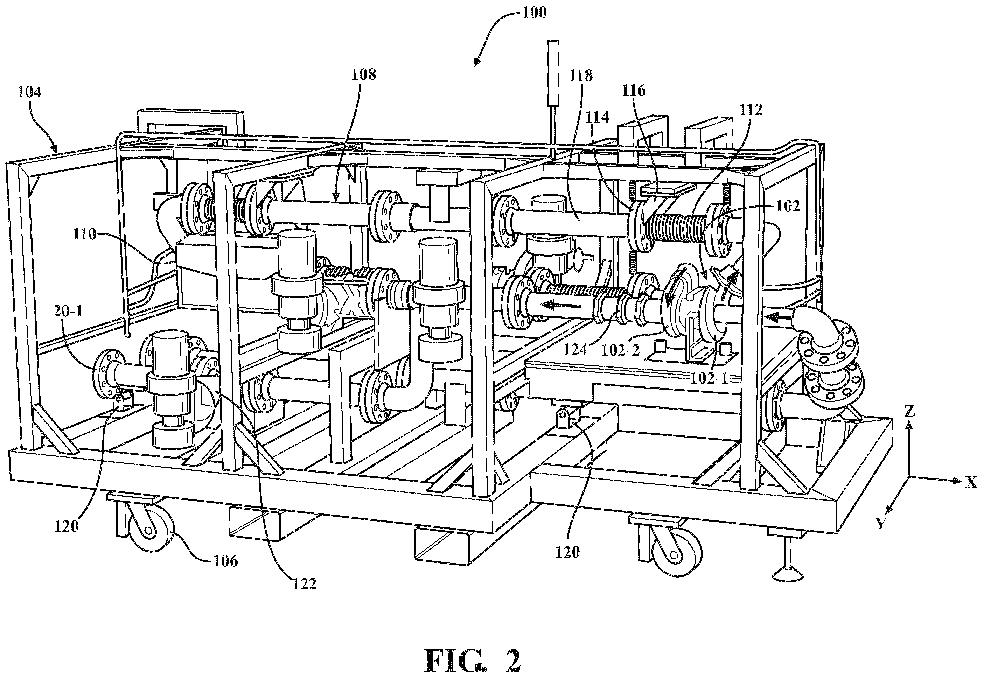

As shown in FIGS. 1B and 2, the testing arrangement 10 may further include a test stand 100 in operative communication with the AHRS 12 and configured to position thereon a test unit, such as an air cycling machine (ACM) 102. The ACM 102 is configured to vary pressure (and temperature) of air conveyed therethrough. As shown, the ACM 102 has a compressor 102-1 (with an inlet 102-1A and an outlet 102-1B) and a turbine 102-2 (with an inlet 102-2A and an outlet 102-2B) having respective bladed wheels mounted to a common shaft. The test stand 100 includes a support structure 104 and a plurality of wheels 106 mounted to the support structure (as shown in FIG. 2) and configured to facilitate mobility of the test stand. The test stand 100 also includes a duct assembly 108 moveably mounted to the support structure 104. The duct assembly 108 is configured to receive the pressure and temperature regulated air 14A from the outlet of the AHRS 10 and supply the subject air to the ACM compressor inlet 102-1A. The test stand 100 additionally includes a heat exchanger 110 in fluid communication with the ACM via the duct assembly 108 and configured to reduce temperature of the airflow 14A received from the ACM compressor outlet 102-1B and circulate the reduced temperature air to the ACM turbine inlet 102-2A. The duct assembly 108 is further configured to exhaust cooled air to ambient and or through the cold side of the attached heat exchanger 110. The heat exchanger 110 does not operate if no air is flowing through the cold side fed by ACM turbine outlet 102-2B. A specific heat exchanger 110 may be selected to replicate actual conditions experienced by the system using the ACM 102 in service, such as in an aircraft application.

A respective pneumatic connector 20-1 (shown in FIGS. 1A, 1B, and 2) fluidly connects the AHRS plumbing at a particular outlet 20F to the air cycling machine (ACM) test stand duct assembly 108. As shown in FIG. 2, the duct assembly 108 may include flexible piping 112, expansion joints 114, and hangers 116 configured to take up movement of the ACM 102 in the X-Y-Z plane and adaptably maintain the duct assembly in position relative to the support structure 104. The duct assembly 108 may additionally include a plurality of discrete rigid pipes 118 on rollers 120 configured to facilitate shifting of the respective rigid pipes relative to the support structure 104 by a technician during set up and removal of the ACM 102. The flexible piping 112 suspended by the hangers 116 provides the system operator with the ability to connect the ACM 102 to the subject piping and also allow for thermal expansion in the system. For their part, expansion joints 114 and rollers 120 provide additional capacity for thermal expansion. The test stand 100 may also include a filter 122 arranged in fluid communication with the duct assembly 108 to remove contaminants from the pressure and temperature regulated air 14A supplied to the ACM 102.

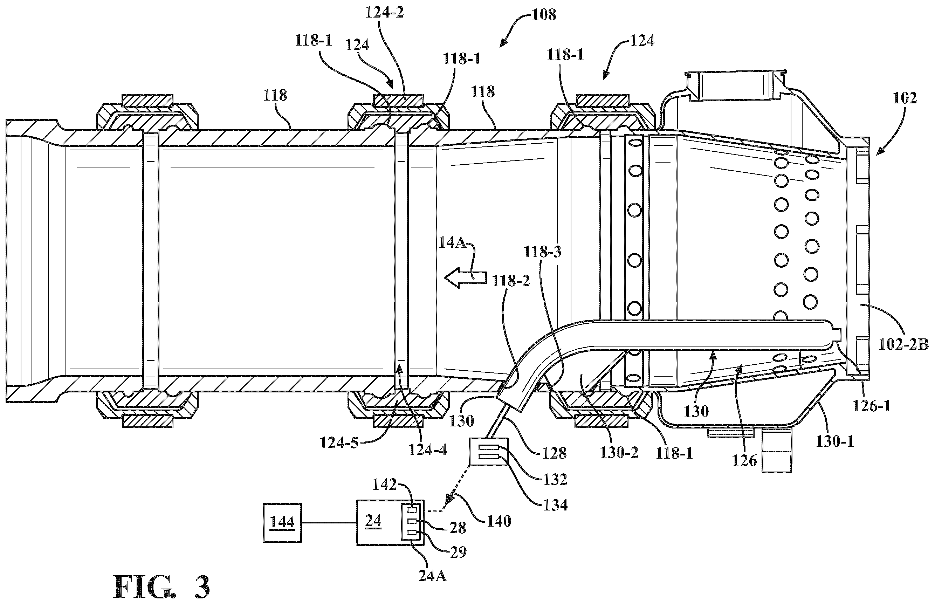

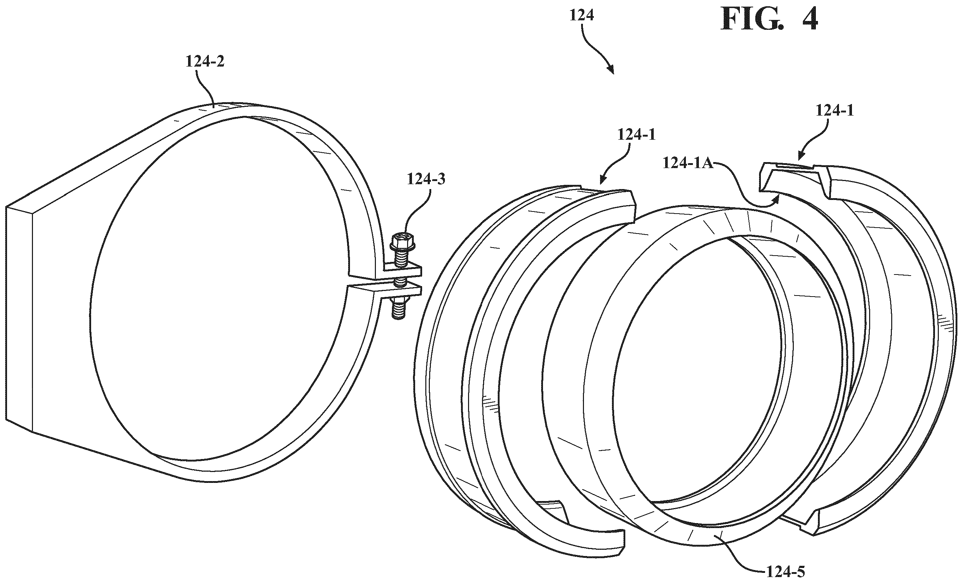

As shown in FIGS. 2-4, test stand 100 may additionally include at least one coupler 124 configured to connect the ACM 102 to the duct assembly 108, as well as join individual neighboring pipes 118, thereby creating individual thermal expansion joints. Specifically, coupler 124 includes a multi-segment retaining shell 124-1 having a generally V-shaped cross section 124-1A (shown in FIG. 4) inner surface configured to draw together ends of adjoining (neighboring or adjacent) pipes 118. The coupler 124 also includes a band 124-2 configured to draw together segments of the retaining shell 124-1 via a tightened fastener 124-3 and hold the shell in the compressed state. Additionally, as shown in FIG. 3, the V-shaped cross section 124-1A may be sized to generate a gap 124-4 between ends of adjoining pipes 118. The gap 124-4 is beneficial for absorbing expansion and/or contraction of adjoining pipes 118 in the duct assembly 108.

The coupler 124 may further include a high-temperature material, e.g., silicon, sealing ring 124-5 arranged on the outer diameter of the adjoining pipes 118 (shown in FIG. 3). The sealing ring (124-5) is arranged between the V-shaped cross section 124-1A inner surface of the retaining shell 124-1 and the outer diameter of the two adjoining pipes 118. The sealing ring 124-5 is configured to block leakage of the pressure and temperature regulated air 14A from between the adjoining pipe ends. As shown in FIG. 3, the adjoining pipe 118 ends may include adjacent retaining ridges 118-1. The V-shaped cross-section inner surface 124-1A is configured to apply a squeezing force to the adjacent retaining ridges 118-1 on the ridges' outer diameter. The multi-segment retaining shell 124-1 applies the squeezing force through the corresponding sealing ring 124-5 to thereby draw together the adjoining pipe ends and counter the tendency of the joined pipes from coming apart. The coupler shell 124-1 is sized to keep the adjoining pipe 118 ends from contacting each other as determined by how and where the shell engages the ridges 118-1 through the sealing ring 124-5.

Overall, the coupler 124 allows the pipes 118 of test stand 100 to be joined with an airtight removable connector capable of absorbing the thermal expansion or contraction of the duct assembly 108 thereby protecting the pipes from cracking or breaking at their mounting points. In other words, couplers 124 enable construction of thermal expansion and contraction absorbing joints within the context of the AHRS 12. The construction of coupler 124 may allow up to 0.4 inches of thermal expansion or contraction to be absorbed between the adjoining pipe ends (at each coupler) without leakage. The coupler 124 also permits one test unit (e.g., ACM 102) to be removed and replaced with another test unit and allows an operator to install a speed sensor (as discussed below) into the ACM 102.

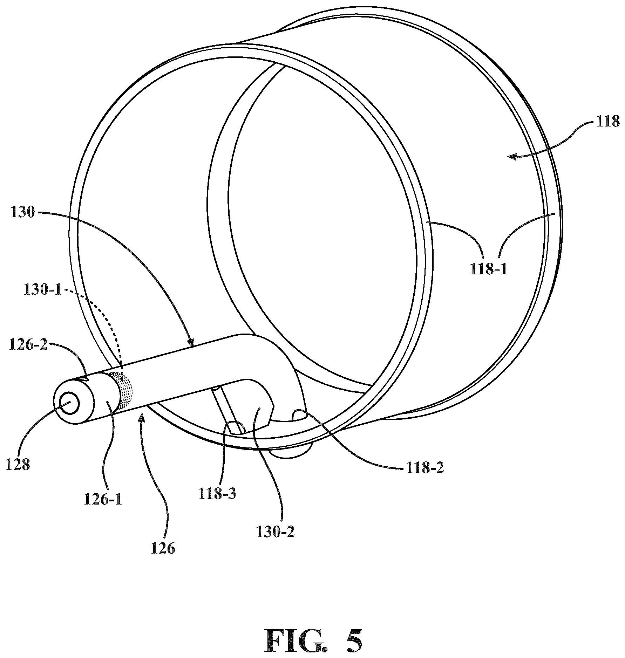

As shown in FIG. 1B, the test stand 100 may further include an optical speed sensor 126 configured to detect rotational speeds of the ACM 102. The optical speed sensor 126 is arranged within one of the pipes 118 (thereby forming a speed sensor assembly) downstream of the ACM turbine outlet 102-2B. The speed sensor 126 is configured to withstand extreme temperatures likely to be encountered during operation of the turbine 102-2, e.g., in a range of -63 to +388 Fahrenheit, speed sensor assembly. The speed sensor 126 may be positioned inside a particular pipe 118, in line with the airflow 14A. As understood by those skilled in the art, the ACM turbine 102-2 has a plurality of turbine blades. The speed sensor 126 is configured to be positioned proximally to and face the rotating blades of the ACM turbine 102-2 wheel and thereby detect movement of individual blades. The subject pipe 118 defines an aperture 118-2 for a fiber optic cable 128 (shown in FIGS. 3 and 5). The aperture 118-2 is sealed around the perimeter of the fiber optic cable 128 to prevent leakage of air. The fiber optic cable 128 provides communication between the speed sensor 126 and the electronic controller 24.

The speed sensor 126 may also include an adapter or a tube 130 (variant configuration of which is shown in FIGS. 3 and 5) routing the fiber optic cable 128 therethrough and defining a threaded end 130-1 configured to accept a sensor tip 126-1. The adapter 130 may pass through the aperture 118-2, with the aperture being sealed around the perimeter of the adapter to prevent leakage of air. The speed sensor tip 126-1 may be axially adjustable via the threaded end 130-1 to facilitate precise positioning of the fiber optic cable 128 relative to its mounting pipe 118. The speed sensor 126 may further include a setscrew 126-2 configured to fix the position of the tip 126-1 relative to the threaded end 130-1. The adapter 130 may also define a distal end configured to interface with and be fixedly mounted via a fin 130-2 (shown in FIGS. 3 and 5) to a specific pipe 118. As shown in FIG. 3, the fin 130-2 may be arranged and welded within a slot 118-3 defined by pipe 118 for precise positioning of the optical speed sensor 126 relative to the ACM turbine outlet 102-2B.

As shown in FIG. 3, the speed sensor 126 additionally includes an LED transmitter/receiver 132 and an amplifier 134 (operatively connecting the optical cable to the electronic controller 24), and two couplers 124 connecting the pipe 118 with the speed sensor assembly to the ACM 102 and to the duct assembly 108 of the test stand 100. One coupler 124 is configured to rigidly connect the speed sensor 126 to the ACM 102 to maintain a consistent distance between the end of the fiber optic cable 128 and the blades of the ACM turbine 102-2. Once the speed sensor 126 assembly is connected to the ACM 102, position of the fiber optic cable 128 may be adjusted and fixed via the threaded end 130-1 and the setscrew 126-2 to facilitate precise location of the cable end relative to the spinning blades of ACM turbine 102-2. The electronic controller 24 may use the speed sensor 126 signal as a data point to adjust main line pressure at the outlet 20F and thereby adjust the speed of ACM turbine 102-2 during a test.

The electronic controller 24 may be configured to determine instantaneous or current rotational speed 142 of the ACM 102 using a signal 140 received from the speed sensor 126 via the fiber optic cable 128 and output the determined rotational speed to a monitoring device/display 144. As will be discussed in detail below, the test stand 100 may further include multiple temperature sensors or thermocouples configured to detect air 14A and component temperatures and pressure transducers to detect air pressure in discrete locations within the duct assembly 108, the test stand 100, and the ACM 102 test unit. These sensors are used to communicate the detected data to electronic controller 24 for assessment. The subject assessment may be automated via the controller algorithm 26 set to display, for example, a pass or fail status of the unit on test and the detailed data recorded. As shown in FIG. 1B, the pressure transducer 22 may be arranged on the test stand 100 in the duct assembly 108 and configured to detect pressure of the air 14A upstream or at the ACM compressor inlet 102-1A. The electronic controller 24 in turn compares the subject detected pressure to the preset pressure value 28 programmed therein to regulate pressure of the conveyed air 14 at the line outlet 20F of the AHRS.

With reference to FIG. 1B, the test stand 100 may receive the pressure and temperature regulated air 14A from the AHRS 12 via the outlet 20F. The parameters of inlet airflow 14A to the test stand 100 may reach 580 degrees F and 80 Psig at 220 lbs/min. As shown, the airflow 14A initially travels through the filter 122 to ensure no foreign particles or debris reach the ACM 102. The inlet pressure and temperature of the airflow 14A are measured by the pressure transducer 22 and a temperature sensor, such as a resistance-based detector, 152, respectively, and communicated to the electronic controller 24. The inlet airflow 14A is then directed via duct assembly 108 to the ACM compressor inlet 102-1A, where its pressure and temperature are increased. A temperature sensor 154 measures the temperature of the airflow at compressor outlet 102-1B and communicates the corresponding data to the electronic controller 24. The airflow then travels through the hot side of the heat exchanger 110 and drops in temperature and pressure.

After being cooled down via the heat exchanger 110, the airflow is directed into an electronic controller 24 actuated butterfly valve 156. The butterfly valve 156 is configured to generate a required test pressure differential (programmed into the electronic controller 24) between the compressor outlet 102-1B and the turbine inlet 102-2A. A temperature sensor 158 measures the temperature of the airflow at the turbine inlet 102-2A and communicates the corresponding data to the electronic controller 24. A pressure transducer 160 measures the actual pressure differential between the compressor outlet 102-1B and the turbine inlet 102-2A and communicates such data to the electronic controller 24 for actuating the butterfly valve 156. A pressure transducer 162 measures the pressure of the airflow at turbine inlet 102-2A and communicates the corresponding data to the electronic controller 24. The airflow travels through turbine 102-2 and drops further in temperature and pressure.

As shown in FIG. 1B, the ACM 102 test unit may additionally include thermocouples 164 and 166, configured to detect temperatures of bearings (not shown) proximate the respective ACM compressor 102-1 and turbine 102-2. The thermocouples 164, 166 also communicate the detected ACM assembly temperatures to the electronic controller 24 for assessment of health of the ACM 102 test unit. The optical speed sensor 126 is arranged in duct assembly 108 to measure the rotational speed of the turbine 102-2 wheel. The optical speed sensor 126 communicates the measured rotational speed of the turbine 102-2 wheel to the electronic controller 24, as described above.

Upon exiting turbine 102-2, a pressure transducer 168 measures the pressure and a temperature sensor 170 measures the temperature of the airflow at turbine outlet 102-2B and communicates the corresponding data to the electronic controller 24. After the pressure and temperature measurements, the airflow is directed to an electronic controller 24 actuated ball valve 172 to regulate back pressure on the entire test stand 100. Following a junction J7, the airflow travels into an electronic controller 24 modulated ball valve 174 and ball valve 176 to achieve a desired drop in airflow temperature between the compressor outlet 102-1B and the turbine inlet 102-2A programmed into the controller. Specifically, the desired temperature drop may be achieved by passing the comparatively colder turbine outlet 102-2B air over projections or fins arranged on an external surface of a heat exchanger 110 tube channeling the compressor hot air. Accordingly, in such an arrangement, the hot and cold air would not be physically mixed. Furthermore, if less cooling is required, the air may be routed around the cold side of the heat exchanger 110 to atmosphere. Following regulation of the temperature drop across the compressor outlet 102-1B and the turbine inlet 102-2A, the airflow is exhausted to atmosphere at outlet 178.

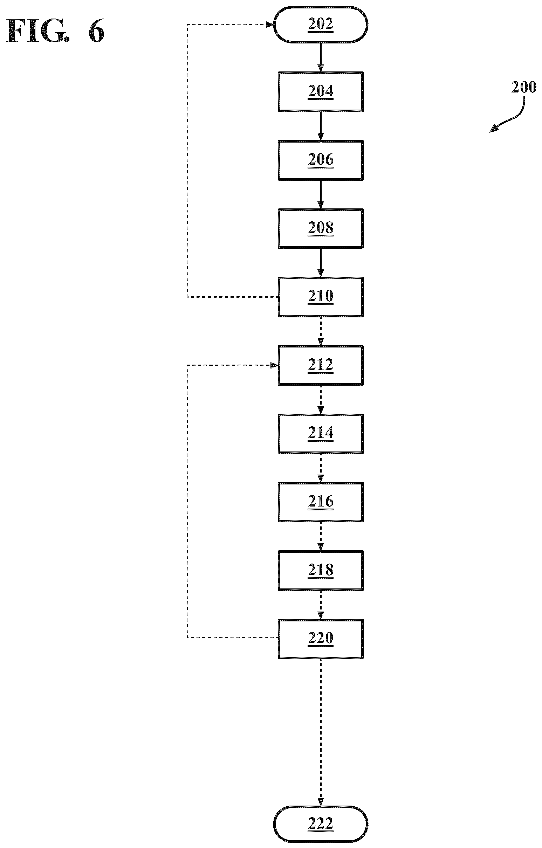

FIG. 6 depicts a testing method 200. Method 200 employs the testing arrangement 10 including the air heating and routing system (AHRS) 12, as described above with respect to FIGS. 1-5. Method 200 may be used to facilitate performance assessment and development of machinery, such as the ACM 100, operated using the flow of pressure- and temperature-controlled air 14A generated by the AHRS 12. Method 200 commences in Block 202, where it includes receiving the flow of air 14 via plumbing 20 of the air heating and routing system (AHRS) 12. Following Block 202, the method proceeds to Block 204. In Block 204, method 200 includes detecting pressure of the conveyed air 14 via the pressure transducer 22. For example, the pressure transducer 22 may be arranged on the test stand 100, as described above with respect to FIGS. 1A and 1B, and the air pressure may be specifically detected at the ACM compressor inlet 102-1A.

Following detection of pressure of the conveyed air 14 in Block 204, method 200 proceeds to Block 206. In Block 206, method 200 includes regulating pressure of the conveyed air 14 via the three-stage pressure adjusting subsystem 16 using the pressure detected by the pressure transducer 22. As described above with respect to FIGS. 1-5, the electronic controller 24 may be programmed with the preset pressure value 28 and regulate the pressure of the conveyed air 14 at the outlet of the AHRS 12 by comparing the pressure detected by the transducer 22 to the preset pressure value. In Block 206, the method may specifically include reducing and maintaining pressure of the conveyed air 14 via the first valve 30.

In Block 206, following reduction of the air pressure via the first valve 30, the method may additionally include regulating pressure of the conveyed air 14 based on required outlet pressure of the AHRS 12 via one of the second, third, and fourth valve 32, 34, 36. After pressure of the conveyed air 14 is regulated in the second stage 16-2, method may include controlling pressure of the conveyed air 14 at the outlet, e.g., outlet 20E, of the AHRS 12 by the electronic controller 24 via the fifth pressure regulating valve 38. For example, if the pressure detected by the transducer 22 diverges from the preset pressure value 28 by greater than 0.5 Psi, one of the pressure regulating valves 32, 34, 36 of the second stage 16-2 may be actuated with input from the previously discussed active control loop using the fifth pressure regulating valve 38 for further pressure adjustment.

After Block 206, the method 200 advances to Block 208. In Block 208, method 200 includes regulating temperature of the conveyed air 14 via the air heater 18. Method 200 advances from Block 208 to Block 210, where the method includes outputting the pressure and temperature regulated air 14A via the AHRS plumbing 20, such as at the outlet 20F. The method may loop back from Block 210 to Block 202 for continuing to receive the flow of air 14. Method 200 may advance from Block 210 to Block 212, where the method includes receiving the pressure and temperature regulated air 14A from the outlet 20F of the AHRS 12 via the test stand 100 configured to cycle the ACM 102. Method 200 may then advance to Block 214. In Block 214, the method includes supplying the pressure and temperature regulated air 14A to the ACM compressor inlet 102-1A to increase temperature and pressure of the airflow, resulting in temperature and pressure rising at the Compressor outlet.

From Block 214, the method may proceed to Block 216, where the method includes reducing, via the heat exchanger 110, the temperature of the air received from ACM compressor outlet 102-1B and circulated to the turbine inlet 102-2A. Throughout Blocks 212-216, the method may include detecting, via appropriate sensors, temperatures and pressures of the air in discrete locations within the duct assembly 108 and communicating the detected temperatures to the electronic controller 24. After Block 216, the method may proceed to Block 218, where the method includes detecting rotational speed of the ACM 102, e.g., at the turbine 102-2, via the fiber-optic speed sensor 126 and communicating the detected ACM speed to the electronic controller 24. In Block 218, the method may additionally include outputting the determined rotational speed to a monitoring device/display 144 via the electronic controller 24. In Block 218, method 200 may also employ the controller algorithm 26 to record detected data and provide the system user with a pass/fail condition of the ACM 102 test unit, as well as record and display the received data values.

After Block 218, method 200 may proceed to Block 220 where the method includes exhausting air from the ACM turbine outlet 102-2B to atmosphere via outlet 178. In Blocks 218-220, the method may also include detecting and controlling the exhaust air pressure and temperature. Following Block 220, the method may loop back to Block 212 to continue receiving pressure and temperature regulated air 14A from a respective outlet of the AHRS 12. Alternatively, once the appropriate test procedure, such as performance assessment of the ACM 102, has been completed, method 200 may terminate in Block 222.

Further, the disclosure comprises configurations according to the following clauses:
Clause 1. A testing arrangement comprising:
   an air heating and routing system (AHRS) configured to convey a flow of air, including:
      a three-stage pressure adjusting subsystem configured to regulate pressure of the conveyed air;
      an air heater configured to regulate temperature of the conveyed air; and
      AHRS plumbing configured to fluidly connect the air heater and the three-stage pressure adjusting subsystem and convey the flow of air;
   a pressure transducer configured to detect pressure of the conveyed air; and
   an electronic controller in operative communication with the air heater, the three-stage pressure adjusting subsystem, and the pressure transducer, and configured to regulate the three-stage pressure adjusting subsystem, using the pressure of the conveyed air detected by the pressure transducer, and the air heater to output the pressure and temperature regulated air via the AHRS plumbing.
Clause 2. The testing arrangement according to clause 1, further comprising an actuation sensor configured to detect the flow of air and enable, via the electronic controller, operation of the air heater when the flow of air is detected.
Clause 3. The testing arrangement according to clause 1 or 2, wherein the three-stage pressure adjusting subsystem includes:
   a first stage having a dome-loaded pressure reducing first valve having a first valve outlet pressure sensor and a pressure maintaining feedback loop;
   a second stage having three pressure regulating valves, including a second, a third, and a fourth valve, arranged in parallel, wherein one of the three pressure regulating valves is selected to regulate pressure of the conveyed air based on required outlet pressure of the AHRS; and
   a third stage having a fifth pressure regulating valve, operated by the electronic controller, arranged in line with the flow of conveyed air in the AHRS plumbing, and configured to control the pressure of the conveyed air at an outlet of the AHRS defined by the AHRS plumbing.
Clause 4. The testing arrangement according to clause 3, wherein the dome-loaded pressure reducing first valve is configured to reduce pressure of the conveyed air from 700 to 150 Psig.
Clause 5. The testing arrangement according to clause 3 or 4, wherein, in the second stage, the subject selected valve is tuned for fine pressure control to reduce the pressure from 150 Psig to a selected preset pressure value and maintain the subject pressure at +/-0.5 Psig.
Clause 6. The testing arrangement according to any one of clauses 3 to 5, wherein, in the third stage, the fifth pressure regulating valve is regulated by the electronic controller in an active pressure control loop to actuate the second stage when a difference between detected pressure at the outlet of the AHRS and the preset pressure value is greater than a preset deviation.
Clause 7. The testing arrangement according to clause 6, wherein the preset deviation is +/- 0.015 Psig.
Clause 8. The testing arrangement according to any one of clauses 1 to 7, further comprising a test stand in operative communication with the AHRS and configured to position thereon a test unit, the test stand including:
   a support structure; and
   a duct assembly moveably mounted to the support structure and configured to receive the conveyed air from the outlet of the AHRS, supply the conveyed air to an inlet of the test unit, and exhaust air from an outlet of the test unit to atmosphere; and
   at least one sensor configured to detect temperature of the conveyed air within the duct assembly and communicate the detected temperature to the electronic controller.
Clause 9. The testing arrangement according to clause 8, wherein the pressure transducer is arranged on the test stand and configured to detect pressure of the conveyed air at the inlet to the test unit.
Clause 10. The testing arrangement according to clause 9, wherein the electronic controller is programmed with a preset pressure value, and wherein the electronic controller is further configured to regulate pressure of the conveyed air to output the conveyed air at the outlet of the AHRS via comparing the detected pressure to the preset pressure value.
Clause 11. A testing method comprising:
   receiving a flow of air via a plumbing of an air heating and routing system (AHRS);
   detecting, via a pressure transducer in operative communication with an electronic controller, pressure of the conveyed air;
   regulating, via a three-stage pressure adjusting subsystem in operative communication with the electronic controller, pressure of the conveyed air using the pressure detected by the pressure transducer;
   regulating, via an air heater in operative communication with the electronic controller, temperature of the conveyed air; and
   outputting, via the AHRS plumbing, the pressure and temperature regulated air.
Clause 12. The method according to clause 11, wherein the AHRS additionally includes an actuation sensor configured to detect the flow of air, the method further comprising detecting the flow of air via the actuation sensor and enabling, via the electronic controller, operation of the air heater when the flow of air is detected.
Clause 13. The method according to clause 11 or 12, wherein the three-stage pressure adjusting subsystem includes:
   a first stage having a dome-loaded pressure reducing first valve having a first valve outlet pressure sensor and a pressure maintaining feedback loop;
   a second stage having three pressure regulating valves, including a second, a third, and a fourth valve, arranged in parallel, wherein one of the three pressure regulating valves is selected to regulate pressure of the conveyed air based on required outlet pressure of the AHRS; and
   a third stage having a fifth pressure regulating valve, operated by the electronic controller, arranged in line with the flow of the conveyed air in the AHRS plumbing, and configured to control the pressure of the conveyed air at an outlet of the AHRS defined by the AHRS plumbing;
   the method further comprising
      reducing and maintaining pressure of the conveyed air via the first valve;
      regulating pressure of the conveyed air based on required outlet pressure of the AHRS via one of the second, third, and fourth valve; and
      controlling the pressure of the conveyed air at the outlet of the AHRS by the electronic controller via the fifth pressure regulating valve.
Clause 14. The method according to clause 13, wherein reducing, via the first valve, the pressure of the conveyed air is from 700 to 150 Psig.
Clause 15. The method according to clause 13 or 14, wherein, in the second stage, the subject selected valve is tuned for fine pressure control, and wherein the method includes reducing, via the subject selected valve, the pressure from 150 Psig to a selected preset pressure value and maintain the subject pressure at +/-0.5 Psig.
Clause 16. The method according to any of clauses 13 to 15, wherein, in the third stage, the method includes regulating the fifth pressure regulating valve by the electronic controller in an active pressure control loop to actuate the second stage when a difference between detected pressure at the outlet of the AHRS and the preset pressure value is greater than a preset deviation.
Clause 17. The method according to any one of clauses 11 to 16, further comprising:
   receiving the pressure and temperature regulated air from the outlet of the AHRS via a test stand in operative communication with the AHRS and configured to position thereon a test unit, the test stand including:
      a support structure; and
      a duct assembly moveably mounted to the support structure and configured to receive the conveyed air from the outlet of the AHRS and supply the conveyed air to an inlet of the test unit;
      at least one sensor configured to detect temperature of the air within the duct assembly;
   supplying the conveyed air to the inlet of the test unit;
   detecting, via the at least one sensor, temperature of the conveyed air within the duct assembly and communicating the detected temperature to the electronic controller; and
   exhausting air from an outlet of the test unit to atmosphere.
Clause 18. The method according to clause 17, wherein the pressure transducer is arranged on the test stand, and wherein the method includes detecting, via the pressure transducer, pressure of the conveyed air at the inlet to the test unit.
Clause 19. The method according to clause 18, wherein the electronic controller is programmed with a preset pressure value, the method further comprising regulating, via the electronic controller, pressure of the conveyed air at the outlet of the AHRS via comparing the detected pressure to the preset pressure value.
Clause 20. A testing arrangement comprising:
   an air heating and routing system (AHRS) configured to convey a flow of air, including:
      a three-stage pressure adjusting subsystem configured to regulate pressure of the conveyed air;
      an air heater configured to regulate temperature of the conveyed air; and
      AHRS plumbing configured to fluidly connect the air heater and the three-stage pressure adjusting subsystem and convey the flow of air;
   a pressure transducer configured to detect pressure of the conveyed air;
   an electronic controller in operative communication with the air heater, the three-stage pressure adjusting subsystem, and the pressure transducer, and configured to regulate the three-stage pressure adjusting subsystem, using the pressure of the conveyed air detected by the pressure transducer, and the air heater to output the conveyed air via the AHRS plumbing;
   a test stand in operative communication with the AHRS and configured to position thereon an air cycling machine (ACM) having a compressor and a turbine, the test stand including:
      a support structure; and
      a duct assembly moveably mounted to the support structure and configured to receive the conveyed air from an outlet of the AHRS defined by the AHRS plumbing, supply the conveyed air to an inlet of the compressor of the ACM, and exhaust air from an outlet of the turbine of the ACM to atmosphere; and
   at least one sensor configured to detect temperature of the conveyed air within the duct assembly and communicate the detected temperature to the electronic controller;
   wherein the pressure transducer is arranged on the test stand and configured to detect pressure of the air at the inlet to the compressor of the ACM.

The detailed description and the drawings or figures are supportive and descriptive of the disclosure, but the scope of the disclosure is defined solely by the claims. While some of the best modes and other embodiments for carrying out the claimed disclosure have been described in detail, various alternative designs and embodiments exist for practicing the disclosure defined in the appended claims. Furthermore, the embodiments shown in the drawings, or the characteristics of various embodiments mentioned in the present description are not necessarily to be understood as embodiments independent of each other. Rather, it is possible that each of the characteristics described in one of the examples of an embodiment can be combined with one or a plurality of other desired characteristics from other embodiments, resulting in other embodiments not described in words or by reference to the drawings. Accordingly, such other embodiments fall within the framework of the scope of the appended claims.

## Claims

1. A testing arrangement comprising:
an air heating and routing system, AHRS, (12) configured to convey a flow of air (14), including:
a three-stage pressure adjusting subsystem (16) configured to regulate pressure of the conveyed air;
an air heater (18) configured to regulate temperature of the conveyed air; and
AHRS plumbing (20) configured to fluidly connect the air heater and the three-stage pressure adjusting subsystem and convey the flow of air;
a pressure transducer (22) configured to detect pressure of the conveyed air; and
an electronic controller (24) in operative communication with the air heater, the three-stage pressure adjusting subsystem, and the pressure transducer, and configured to regulate the three-stage pressure adjusting subsystem, using the pressure of the conveyed air detected by the pressure transducer, and the air heater to output the pressure and temperature regulated air via the AHRS plumbing.

2. The testing arrangement according to claim 1, further comprising an actuation sensor (76) configured to detect the flow of air and enable, via the electronic controller, operation of the air heater (18) when the flow of air is detected.

3. The testing arrangement according to claim 1 or 2, wherein the three-stage pressure adjusting subsystem includes:
a first stage (16-1) having a dome-loaded pressure reducing first valve (30) having a first valve outlet pressure sensor (30-1) and a pressure maintaining feedback loop (30-2);
a second stage (16-2) having three pressure regulating valves, including a second (32), a third (34), and a fourth (36) valve, arranged in parallel, wherein one of the three pressure regulating valves (32, 34, 36) is selected to regulate pressure of the conveyed air based on required outlet pressure of the AHRS; and
a third stage (16-3) having a fifth pressure regulating valve (38), operated by the electronic controller, arranged in line with the flow of conveyed air in the AHRS plumbing, and configured to control the pressure of the conveyed air at an outlet (20F) of the AHRS defined by the AHRS plumbing;
wherein the dome-loaded pressure reducing first valve is preferably configured to reduce pressure of the conveyed air from 700 to 150 Psig.

4. The testing arrangement according to claim 3, wherein, in the second stage (16-2), the subject selected valve (32, 34, 36) is tuned for fine pressure control to reduce the pressure from 150 Psig to a selected preset pressure value (28) and maintain the subject pressure at +/-0.5 Psig.

5. The testing arrangement according to claim 3 or 4, wherein, in the third stage (16-3), the fifth pressure regulating valve (38) is regulated by the electronic controller in an active pressure control loop to actuate the second stage when a difference between detected pressure at the outlet of the AHRS and the preset pressure value is greater than a preset deviation (29), and wherein the preset deviation preferably is +/-0.015 Psig.

6. The testing arrangement according to any one of claims 1 to 5, further comprising a test stand (100) in operative communication with the AHRS and configured to position thereon a test unit (102), the test stand including:
a support structure (104); and
a duct assembly (108) moveably mounted to the support structure and configured to receive the conveyed air from the outlet of the AHRS, supply the conveyed air to an inlet (102-1A) of the test unit, and exhaust air from an outlet (102-2B) of the test unit to atmosphere; and
at least one sensor (152) configured to detect temperature of the conveyed air within the duct assembly and communicate the detected temperature to the electronic controller;
wherein the pressure transducer (22) is preferably arranged on the test stand and preferably configured to detect pressure of the conveyed air at the inlet to the test unit.

7. The testing arrangement according to claim 6, wherein the electronic controller is programmed with a preset pressure value (28), and wherein the electronic controller is further configured to regulate pressure of the conveyed air to output the conveyed air at the outlet of the AHRS via comparing the detected pressure to the preset pressure value.

8. A testing method (200) comprising:
(202) receiving a flow of air (14) via a plumbing (20) of an air heating and routing system, AHRS, (12);
(204) detecting, via a pressure transducer (22) in operative communication with an electronic controller (24), pressure of the conveyed air;
(206) regulating, via a three-stage pressure adjusting subsystem (16) in operative communication with the electronic controller, pressure of the conveyed air using the pressure detected by the pressure transducer;
(208) regulating, via an air heater (18) in operative communication with the electronic controller, temperature of the conveyed air; and
(210) outputting, via the AHRS plumbing, the pressure and temperature regulated air.

9. The method according to claim 8, wherein the AHRS additionally includes an actuation sensor (76) configured to detect the flow of air, the method further comprising detecting the flow of air via the actuation sensor and enabling, via the electronic controller, operation of the air heater (18) when the flow of air is detected.

10. The method according to claim 8 or 9, wherein the three-stage pressure adjusting subsystem includes:
a first stage (16-1) having a dome-loaded pressure reducing first valve (30) having a first valve outlet pressure sensor (30-1) and a pressure maintaining feedback loop (30-2);
a second stage (16-2) having three pressure regulating valves, including a second (32), a third (34), and a fourth (36) valve, arranged in parallel, wherein one of the three pressure regulating valves (32, 34, 36) is selected to regulate pressure of the conveyed air based on required outlet pressure of the AHRS; and
a third stage (16-3) having a fifth pressure regulating valve (38), operated by the electronic controller, arranged in line with the flow of the conveyed air in the AHRS plumbing, and configured to control the pressure of the conveyed air at an outlet (20F) of the AHRS defined by the AHRS plumbing;
the method further comprising
reducing and maintaining pressure of the conveyed air via the first valve;
regulating pressure of the conveyed air based on required outlet pressure of the AHRS via one of the second, third, and fourth valve; and
controlling the pressure of the conveyed air at the outlet of the AHRS by the electronic controller via the fifth pressure regulating valve;
wherein reducing, via the first valve, the pressure of the conveyed air is preferably from 700 to 150 Psig.

11. The method according to claim 10, wherein, in the second stage, the subject selected valve (32, 34, 36) is tuned for fine pressure control, and wherein the method includes reducing, via the subject selected valve, the pressure from 150 Psig to a selected preset pressure value (28) and maintain the subject pressure at +/-0.5 Psig.

12. The method according to claim 10 or 11, wherein, in the third stage, the method includes regulating the fifth pressure regulating valve by the electronic controller in an active pressure control loop to actuate the second stage when a difference between detected pressure at the outlet of the AHRS and the preset pressure value is greater than a preset deviation (29).

13. The method according to any one of claims 8 to 12, further comprising:
(212) receiving the pressure and temperature regulated air from the outlet of the AHRS via a test stand (100) in operative communication with the AHRS and configured to position thereon a test unit (102), the test stand including:
a support structure (104); and
a duct assembly (108) moveably mounted to the support structure and configured to receive the conveyed air from the outlet of the AHRS and supply the conveyed air to an inlet (102-1A) of the test unit;
at least one sensor (152) configured to detect temperature of the air within the duct assembly;
(214) supplying the conveyed air to the inlet of the test unit;
(216) detecting, via the at least one sensor, temperature of the conveyed air within the duct assembly and communicating the detected temperature to the electronic controller; and
(220) exhausting air from an outlet (102-2B) of the test unit to atmosphere;
wherein the pressure transducer is preferably arranged on the test stand, and wherein the method preferably includes detecting, via the pressure transducer, pressure of the conveyed air at the inlet to the test unit.

14. The method according to claim 13, wherein the electronic controller is programmed with a preset pressure value (28), the method further comprising regulating, via the electronic controller, pressure of the conveyed air at the outlet of the AHRS via comparing the detected pressure to the preset pressure value.

15. A testing arrangement comprising:
an air heating and routing system, AHRS, (12) configured to convey a flow of air (14), including:
a three-stage pressure adjusting subsystem (16) configured to regulate pressure of the conveyed air;
an air heater (18) configured to regulate temperature of the conveyed air; and
AHRS plumbing (20) configured to fluidly connect the air heater and the three-stage pressure adjusting subsystem and convey the flow of air;
a pressure transducer (22) configured to detect pressure of the conveyed air;
an electronic controller (24) in operative communication with the air heater, the three-stage pressure adjusting subsystem, and the pressure transducer, and configured to regulate the three-stage pressure adjusting subsystem, using the pressure of the conveyed air detected by the pressure transducer, and the air heater to output the conveyed air via the AHRS plumbing;
a test stand (100) in operative communication with the AHRS and configured to position thereon an air cycling machine (ACM) (102) having a compressor (102-1) and a turbine (102-2, the test stand including:
a support structure (104); and
a duct assembly (108) moveably mounted to the support structure and configured to receive the conveyed air from an outlet of the AHRS (20F) defined by the AHRS plumbing, supply the conveyed air to an inlet (102-1A) of the compressor of the ACM, and exhaust air from an outlet of the turbine (102-2B) of the ACM to atmosphere; and
at least one sensor (152) configured to detect temperature of the conveyed air within the duct assembly and communicate the detected temperature to the electronic controller;
wherein the pressure transducer is arranged on the test stand and configured to detect pressure of the air at the inlet (102-1A) to the compressor of the ACM.
